# EUROPEAN PATENT SPECIFICATION

(11) **EP 2 479 147 B1**
(45) Date of publication and mention of the grant of the patent: **09.03.2016**
(21) Application number: 09849296.0
(22) Date of filing: 14.09.2009
(51) Int. Cl.: C02F 3/00, C02F 3/20, C02F 3/30, C02F 3/12

(54) **METHOD FOR THE BIOLOGICAL PURIFICATION OF WASTEWATER**
VERFAHREN ZUR BIOLOGISCHEN AUFBEREITUNG VON ABWASSER
PROCÉDÉ DE PURIFICATION BIOLOGIQUE D'EAUX USÉES

(43) Date of publication of application: 25.07.2012
(73) Proprietor: Obschestvo S Ogranichennoi Otvetstvennostyu "Ural Protsess Inzhiniring Kompania (UPEK)", Sheinkmana 20 (RU)
(72) Inventor: KHALEMSKY, Aron Mikhailovich, Sverdlovskaya oblast 623280 (RU); SHVETS, Eduard Moiseevich, Ekaterinburg 620028 (RU); AMBROZ, Ivo, 783 51 Svaty Kopecek (CZ); SLUSARCZYK, Jerzy Robert, PL-60-141 Poznan (PL)
(74) Representative: Sloboshanin, Sergej
(86) International application number: PCT/RU2009/000471
(87) International publication number: WO 2011/031181

(56) References cited:
- EP-A2- 0 847 963
- DE-A1- 4 036 548
- DE-A1- 19 620 158
- DE-C1- 3 602 944
- RU-C1- 2 296 110
- US-A1- 2007 187 324
- US-A1- 2007 205 152
- S.V. YAKOVKEV ET AL. KANALIZATSYA. MOSCOW, STROIIZDAT 1975, XP008168848

## Description

The present invention relates to a method for biological purification of wastewater according to the appended claims.

### Prior Art

A problem of known biological purification methods lies in the increased industrial impact on the environment due to the formation of sufficiently large volumes of excess activated sludge, rendering it necessary to apply equipment for its processing and storage, using reagents applied in the treatment of wastewater sediments, and to build premises for burying the formed sediments. All this results in a secondary pollution of the environment and renders it necessary to use additional land resources.

Another problem is the emission of noxious substances, some of them unpleasant-smelling ones including hydrogen sulfide, from the sediments captured in the wastewater into the atmosphere, and the necessity to increase the dimensions of the health protection zone for that reason, that is, the distance from the purification plant to residential buildings.

Moreover the necessity of continuous removal of secondary pollutions, i. e. of wet sediment from the primary settling tanks and of excess activated sludge from the secondary settling tanks, does not allow the creation of a closed-loop industrial cycle for the purification of wastewater, which renders it impossible to automatize the control of the entire process as a whole and excludes the operation of purification plants with a guaranteed quality of the purified wastewater while lowering the industrial impact on the environment, disposing with operating staff (that is, disposing with the influence of the "human factor").

Methods for biological purification are known, which include two stages, a mechanical purification and a biological purification.

In the first stage the suspended non-water soluble substances are removed, in the second stage the remains from the first stage, suspended and dissolved in the sewage, are removed.

The shortcomings of the method include:
- the formation of secondary pollution in the form of wet sediment in the primary settling tanks in the first stage,
- large quantities of excess activated sludge formed in the biological purification process (secondary pollution).

A method for biological purification of wastewater is known (Patent RU 2220918, published January 10, 2004), according to which the wastewater is mechanically cleaned and subsequently supplied for treatment into an anaerobic bioreactor, an aerobic bioreactor, a settling tank provided with an air lift having a pipe duct for recirculating the activated sludge, a bioreactor for additional purification with a charge for the attached microflora, and a sterilisation chamber. The method enables a reduction of the amount of formed sediment, which is discharged from the anaerobic bioreactor and subsequently dehydrated, for instance in filtering bags.

One shortcoming is that the method does not solve the problem of minimizing the amount of excess sludge formed.

A method for biological purification of wastewater is known (Patent RU 2170217, published July 10, 2001), wherein the wastewater, having been preliminarily run through a mechanical purification in a primary settling tank, is supplied for treatment into an activation tank, in which the formation of zones with an atmosphere differing in oxygen content is facilitated. Further, the mix of wastewater and activated sludge is supplied into a secondary settling tank to be separated into purified wastewater and activated sludge, which is continuously returned to the start of the activation tank.

One shortcoming of the method is the formation of major amounts of wet sediment in the primary settling tank and of excess activated sludge, which must be removed for recovery, which increases the cost of exploiting the purification plants and decreases the effectiveness of the operation of the purification plant.

A biological purification method is known including the supply of wastewater into a preliminary purification chamber, the subsequent treatment by activated sludge in an activation tank divided into an aerobic and an anaerobic zone, with a periodical supply of air, and the separation of the sludge mix in the settling tank, returning the activated sludge into the activation tank (Patent RU 2299864, published May 27,2007).

In the implementation of said method in medium and high productivity purification plants, the interrupted aeration causes additional costs and makes the control of the process difficult.

In a spatial division of the aerobic and anaerobic zones a minimized formation of activated sludge is not facilitated, since there is no self-regulation of the process, which can be performed only in an relative separation of the zones through the formation of transition zones where a specific microflora is created, facilitating the stability of the biological purification process as the composition and amount of wastewater supplied for purification is changed ("superunstable mode") and an increase in the effectiveness of the metabolism of the microorganisms of the activated sludge.

Moreover the method does not solve the problem of noxious emissions including unpleasant-smelling ones during removal of the wet sediments; there is no possibility of automatizing the wastewater purification process.

A method for biological purification is known (Eurasian Patent 004338, published April 29, 2004), comprising the supply of wastewater without mechanical pre-purification in a levelling tank into which air is supplied periodically, for breaking up coarse particulate contaminants, the treatment of the wastewater in an activation tank into which air is supplied, where its biological purification is carried out, the supply of the purified wastewater into a settling tank, where a separation of the activated sludge from the purified wastewater is carried out, and the supply of activated sludge from the settling tank into the activation tank.

Said method does not solve the problem of removing the insoluble contaminants with the organic substances adsorbed on them, rather, only those contaminants are removed which are dissolved in the water as well as particulate contaminants which can be destroyed by an air stream.

The problem of releasing noxious substances, including unpleasant-smelling ones, into the atmosphere is not sufficiently solved, since the problem of removal of noxious organic contaminants in the primary stages of the process is not dealt with.

The existing method is applicable to the purification of wastewater in small purification plants and cannot be applied in large plants due to the interrupted process, since the process itself and its control are rather complicated.

Moreover, in the interrupted aeration the process of decomposition of organic matter adsorbed on insoluble contaminants (not subject to biological degradation) is not fully completed, and the biological purification of the wastewater with a minimized formation of excess activated sludge is not fully completed, which necessitates its removal from the purification plant.

The document EP 0847963 discloses a process to operate a two-stage treatment plant dealing with a combination of municipal and trade water effluent as well as an assembly with an adsorption stage, an intermediate settlement stage, a solid-bed reactor with upstream denitrification reactor and nitrification reactor linked in series. The process treats a combination of municipal and trade water effluent together with the introduction of raw water and the removal of activated sludge. The treatment plant has a biological high-load activation stage, followed by a biologically-intensified filter stage and an outlet for the treated waste water. The biologically-intensified filter stage is operated together with an upstream denitrification stage. A nitrification stage is positioned between the biologically-intensified filter stage and upstream denitrification stage.

According to the document DE 19620158, in a biological treatment process for effluent, water is treated in an activated sludge bed of nitrifying microorganisms. In a subsequent settlement stage, sludge settling out is returned to the activated sludge bed. In DE 19620158 is disclosed that: (a) a first portion of the sludge which is returned to the activated sludge bed is first stabilised in a separate and supplementary sludge treatment stage under nitrification conditions enhancing the maturity of the sludge brew; (b) the supplementary sludge treatment stage is a basin with a firm oxygenated bed; (c) a second portion of the sludge from the subsequent settlement stage is returned directly to the activated sludge bed where it is mixed with the existing contents; (d) the sludge in the oxygenated stage is de-watered before return to the first stage sludge bed; (e) the heat liberated in the oxygenated stage maintains the temperature there at <= 35°C under aerobic conditions; (f) the pH in the oxygenated stage (11) is maintained at 5-6.5; (g) sludge is retained in the basin for \- 10 days before it is returned to the first sludge bed, and (h) between 20% and 60% of the sludge in the first bed consists of sludge returned from the basin.

The document DE 3602944 refers to a process for the purification of waste water (effluent) containing poorly degradable substances, in particular waste water having a high content of poorly degradable substances in a waste water purification plant with an adsorption stage and via an intermediate clarification with sludge take-off and a device for sludge return to a downstream aerobic activation stage through which flows the waste water. A bacterial population chiefly comprising prokaryotes is maintained in the adsorption stage. The waste water is subjected to a facultatively anaerobic degradation process in a plurality of adsorption part-stages, and exposed to an aerobic treatment between the adsorption part-stages. A plant for carrying out the process is also specified.

The most pertinent prior art is a method comprising the mechanical purification of wastewater in a primary settling tank, whereafter the wastewater is supplied into a bioactivator (bioreactor), in which the formation of zones with an atmosphere differing in oxygen content by regulated introduction of oxygen is facilitated, and subsequently the mix of wastewater and activated sludge is taken to a secondary settling tank for separation into purified wastewater and activated sludge, which is continuously returned to the start of the bioreactor. The wet sediment after the primary settling tank is recirculated to the inlet of the primary settling tank to create the conditions for carrying out a hydrolysis process and a hetero-acetogenic process immediately in the primary settling tank. In the secondary settling tank, zones differing in oxygen content are formed by regulating the recirculation speed of the activated sludge from the secondary settling tank to the bioreactor inlet. The zones with an atmosphere differing in oxygen in the bioreactor are arranged horizontally (Patent RU 2296110, published March 27, 2007).

Said method obtains minimized amounts of excess activated sludge compared to known methods, but the industrial process is not closed, since the technical stages are divided, and it is necessary to remove the sediment from the primary settling tank; as a consequence it is impossible to automatize the control system of the biological purification process; the regulation can only be done manually.

The sediment removed from the primary settling tanks contains particulate contaminants which are insoluble in the wastewater and which comprise organic matter adsorbed thereon, which quickly decomposes when extracted from the sewage (an anaerobic process goes on) in the storage places, emitting into the environment the metabolism products of microorganisms - noxious substances, including unpleasant-smelling ones.

As a result, the health protection zones of the purification plants need considerable space, which increases the industrial impact on the environment.

### Disclosure of the Invention

The problem underlying the present invention is the creation of a completely automatized biological purification process by a closed-loop industrial cycle, decreasing capital and exploitation costs and decreasing the industrial impact on the environment.

### The problem is solved as follows.

In a method for biological purification of wastewater, comprising the treatment of the wastewater in a bioreactor with zones alternating in oxygen content when air is supplied to it, the supply of the purified wastewater into a settling tank also comprising zones differing in oxygen content, where the process of biological purification by activated sludge continues, with subsequent separation of the purified sewage and the activated sludge and a return of the activated sludge from the settling tank into the bioreactor, according to the invention a preliminary treatment of the wastewater containing insoluble particulate contaminants with organic substances adsorbed on them is carried out in a preliminary aeration tank, at the inlet of which the activated sludge is supplied from the settling tank to decompose the organic substances adsorbed on the insoluble particulate contaminants, which substances pass into the solution as easily assimilable organic substances, after the preliminary aeration tank the wastewater containing clean insoluble particulate contaminants freed from the organic substances adsorbed on them and the activated sludge are passed to the mechanical purification for removal of said insoluble particulate contaminants from the sewage, further, the sewage containing the activated sludge and the easily assimilable organic substances passed into the solution is supplied into the bioreactor and subsequently into the settling tank, from where the activated sludge is returned to the bioreactor and the preliminary aeration tank, forming a closed-loop industrial cycle for wastewater purification.

The wastewater level in the preliminary aeration tank is kept constant with continuous air supply.

The time which the mix of wastewater and activated sludge spends in the preliminary aeration tank is 45 min. - 1.5 hours.

The amount of activated sludge supplied from the settling tank into the preliminary aeration tank is 5-10 % of the overall amount of recirculated sludge.

The concentration of oxygen of the water-sludge mix in the preliminary aeration tank is maintained at a level of 2.5-3.5 g O₂/m³.

The bioreactor is relatively divided into successively alternating zones differing in oxygen content, the first of which is preferably anaerobic.

The number of zones in the activation tank is even, at least two.

The oxygen concentration in the anaerobic zone of the bioreactor is not higher than 0.7 g O₂/m³.

The oxygen concentration in the aerobic zone of the bioreactor is not lower than 2.5 g O₂/m³.

The amount of activated sludge supplied to the bioreactor is 90-95 % of the overall amount of recirculated activated sludge.

The concentration of activated sludge in the bioreactor is 2.5-7.5 g/dm³.

The relation of the volumes of the anaerobic and aerobic zones in the bioreactor is 1:1.

The mechanical purification of the wastewater containing insoluble contaminants freed from the organic matter adsorbed on them is done preferably by filtration carried out on screens with a screen mesh size of 2-5 mm.

The oxygen concentration in the water-sludge mix in the bottom part of the settling tank is 0.1-0.3 g O₂/m³, and at a depth of 1 m in the settling tank it is 2-2.5 g O₂/m³.

The introduction of a preliminary wastewater treatment stage in the preliminary aeration tank, at the inlet of which the activated sludge is supplied from the settling tank, enables a decomposition of the organic matter adsorbed on the insoluble particulate contaminants into simpler, easily assimilable organic compounds passing into the solution and thereafter performing a maximum assimilation of the activated sludge by the microorganisms in the bioreactor at minimized times; hence a smaller bioreactor volume is required, which reduces the overall capital spent on building the purification plant.

The preliminary aeration tank does not fulfil the function of a receptacle and is used as the first step of biological purification, namely for the decomposition of the organic matter adsorbed on the particulate contaminants.

The subsequent removal of said insoluble contaminants in the mechanical purification apparatus serves the purpose that the particulate contaminants freed from the adsorbed organic matter do not emit noxious (including unpleasant-smelling) substances into the environment in the places where they are processed and stored.

The entirety of the characterising features, particularly the supply of activated sludge from the settling tank into the preliminary aeration tank, the further supply and treatment of the wastewater in the bioreactor with zones of alternating oxygen concentration and subsequently the supply of the wastewater into the settling tank, from which the activated sludge returns to the preliminary aeration tank and the bioreactor creates a closed-loop industrial cycle for purification of wastewater and enables an automatization of the control of the entire biological purification process.

The maintenance of a constant wastewater level in the preliminary aeration tank does not require any equipment for monitoring the maintenance of the level and simplifies the exploitation of the purification plant.

The biological purification of pre-treated wastewater containing easily assimilable organic matter in a bioreactor with zones of alternating oxygen concentration facilitates the decomposition of biogenic substances (C, N) supplied to the purification plant with the wastewater at minimized growth of the activated sludge.

One important factor in this is the fact that the sewage treatment in the bioreactor preferably begins in the anaerobic zone. The activated sludge in the anaerobic zone withdraws organic compounds and uses them to maintain its own activity, while the metabolism products of the microorganisms of the activated sludge are partly gaseous substances facilitating an enlargement of small microorganisms, which also renders a minimized volume of the activated sludge possible.

If the wastewater is supplied immediately to the aerobic zone, then the activated sludge also withdraws organic compounds, but at a maximum growth of the sludge, since in aerobic conditions organic matter dissolved in the wastewater uses microorganisms of the activated sludge to feed on and proliferate, which increases the volume of the sludge, which remains and must be withdrawn from the system and processed further.

The alternation of the zones differing in oxygen content in the activation tank results in a change in the metabolism of the microorganisms of the activated sludge and a shift of the biocenosis in the activated sludge towards the "predators" (larger microorganisms), which renders a minimized growth of the activated sludge possible.

The minimization of the volume of the activated sludge formation makes it possible to leave the stage of removing the sludge from the system and its further processing out of the technical process, which are an indispensable part of all known wastewater purification processes, whereby it is eventually rendered possible to create an algorithm for full automatization of the wastewater purification process in the method according to the invention.

### Embodiment of the Invention

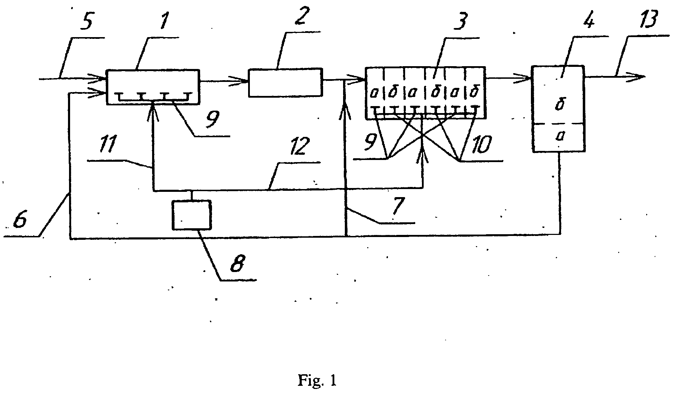

The method is explained by the drawing depicting the scheme for biological purification of wastewater according to the invention, wherein:
- 1: is the preliminary aeration tank,
- 2: is the mechanical purification apparatus,
- 3: is the bioreactor,
- a, 6: are the anaerobic and aerobic zones, respectively, into which the activation tank is relatively divided,
- 4: is the settling tank,
- 6, a: are the aerobic and anaerobic zones, respectively, into which the settling tank 4 is relatively divided,
- 5: is the wastewater supply pipe duct,
- 6: is the pipe duct for supplying the activated sludge from the settling tank into the preliminary aeration tank,
- 7: is the pipe duct for supplying the activated sludge from the settling tank into the bioreactor,
- 8: is the aeration system,
- 9: are the aeration elements for medium-sized bubbles,
- 10: are the aeration elements for fine bubbles,
- 11: is the pipe duct for air supply into the preliminary aeration tank,
- 12: is the pipe duct for air supply into the bioreactor,
- 13: is the outlet for purified wastewater.

### The method is carried out as follows.

The wastewater containing insoluble contaminants with organic compounds contained on them are supplied without mechanical pre-cleaning into the preliminary aeration tank 1 in which the organic compounds adsorbed on the insoluble contaminants undergo a biodegradation by microorganisms of the activated sludge supplied from the settling tank 4. In the preliminary aeration tank 1 a constant high level of wastewater is maintained. Air is continuously supplied into the tank 1 via the pipe duct 11, while from the settling tank 4 activated sludge for decomposition of the organic compounds adsorbed on the insoluble particulate contaminants is also continuously supplied into the tank 1 via the pipe duct 6. The amount of air supplied into the preliminary aeration tank 1 facilitates the maintenance of the oxygen concentration in the water-sludge mix in the preliminary aeration tank 1 at a level of 2.5-3.5 g O₂/m³. The amount of activated sludge supplied from the settling tank 4 into the preliminary aeration tank 1 is 5-10 % of the overall amount of recirculated sludge.

The time required for the process going on in the preliminary aeration tank 1 is 45 min. - 1.5 hours depending on the amount of organic compounds contained in the wastewater. If the process time is less than 45 min., then the required effect of decomposition of the organic compounds adsorbed on the insoluble contaminants will not be achieved. If the process time is more than 1.5 hours, it will result in an unjustified increase in exploitation and capital costs.

The continuous air supply into the preliminary aeration tank 1 and the bioreactor 3 is carried out by an aeration system 8 via aeration elements, for instance, membrane elements 9 for medium-sized bubbles and membrane elements 10 for fine bubbles, arranged at the bottom of the preliminary aeration tank 1 and at the bottom of the bioreactor 3. In the preliminary aeration tank 1 membrane elements 9 for medium-sized bubbles are arranged. In the bioreactor 3 membrane elements 9 for medium-sized bubbles are arranged in the anaerobic zones, while in the aerobic zones membrane elements 10 for fine bubbles are arranged.

From the preliminary aeration tank 1 the sewage containing insoluble particulate contaminants, solute organic compounds, and also additionally solute organic compounds with insoluble particulate contaminants, is passed for mechanical purification to the apparatus 2, where the insoluble particulate contaminants not containing any organic matter adsorbed on them are separated from the pre-treated sewage. The organic matter in the form of simpler, easily assimilable organic compounds, principally in the form of volatile and fatty acids, is dissolved in the wastewater. The mechanical purification of the wastewater containing insoluble contaminants freed from the organic matter adsorbed on them and the activated sludge is carried out preferably by filtration on screens with a mesh size of 2-5 mm. However, the application of other known means such as lattices, screens, or sieve drums is also possible.

The insoluble particulate contaminants freed from organic substances and captured by the mechanical apparatus 2 are discharged from it into containers and are subsequently transported to landfills or premises provided for storage, distribution and processing. Said sediment is characterised by the absence of unpleasant smell.

After the mechanical purification apparatus 2 the sewage, which is freed from insoluble contaminants and which contains the activated sludge and easily assimilable organic substances which have additionally been supplied to the solution, is supplied to the bioreactor 3 where the activated sludge from the settling tank 4 is supplied, in an amount of 90-95 % of the overall amount of the recirculated activated sludge 7. The concentration of activated sludge in the bioreactor 3 is 2.5-7.5 kg/m³.

The bioreactor 3 is relatively divided into zones alternating in oxygen concentration, of which there can be at least two in the bioreactor 3, an anaerobic one (a) and an aerobic one (6).

The oxygen concentration in the anaerobic zone of the bioreactor 3 is not higher than 0.7 g O₂/m³ and in the aerobic one not lower than 2.5 g O₂/m³.

The relation of the volumes of the anaerobic and aerobic zones in the bioreactor 3 is 1:1, which facilitates the process of biological purification of the wastewater with a minimized formation of activated sludge at reduced exploitation costs.

The zones are not separated from one another spatially but are relatively apportioned along the horizontal of the bioreactor 3. The number of zones depends on the pollution of the sewage supplied for purification. If the wastewater supplied to the bioreactor 3 has a BOD5 content of up to 150 mg O₂/dm³, the number of zones chosen is 2. If the value of BOD5 is above 150 mg O₂/dm³, the number of zones chosen is a multiple of 2, that is, 4, 6, 8 and so on.

The alternation of the anaerobic (a) and the aerobic zones (6) in the bioreactor 3 results in a strengthening of the metabolism of the microorganisms when they pass into conditions unfavourable for them, that is, from an anaerobic zone into an aerobic one and subsequently from an aerobic zone into an anaerobic one and so on. During this, omitting the nitrification stage, nitrogen is withdrawn from the sewage in the form of the gaseous products N₂O^{↑}, N₂^{↑}. Organic substances are also withdrawn in the form of the gaseous product CO₂^{↑} (up to 92 %). The amount of excess activated sludge formed thereby is 0.028-0.052 kg per kg BOD withdrawn, which constitutes a withdrawal of activated sludge in the form of suspended matter in the purified wastewater of 3-8 mg/dm³.

The measuring of the oxygen concentration is carried out by an electrochemical method (oximeters) or by a chemical method (Winkler method).

The actual oxygen content is corrected automatically by regulating the rotation of an airblowing motor by a frequency converter in accordance with the optimum value of oxygen concentration, by regulating the air supply into the bioreactor zones via the aeration elements.

After 6-8 hours the mix of effluent and activated sludge leaves the bioreactor 3 and reaches the settling tank 4, which is also relatively divided into zones, namely an aerobic one (6) and an anaerobic one (a), in which the process of aerobic and anaerobic purification is executed continuously, that is, the process of biological purification by activated sludge is continued. Preferably 2/3 of the effective capacity of the settling tank operates as the aerobic zone, preferably 1/3 of the effective capacity of the settling tank operates as the anaerobic zone.

Subsequently the separation of the mix is carried out in the settling tank 4: The clarified part is removed to the discharge 11 while the precipitated activated sludge is removed continuously through the pipe ducts 6 and 7 into the preliminary aeration tank 1 and into the bioreactor 3 (the first anaerobic zone).

The removal speed of the precipitated activated sludge in the settling tank is chosen considering the maintenance of a constant level of activated sludge in the settling tank of 1/3 of its height and considering the creation of anaerobic conditions with an oxygen concentration of 0.1-0.3 g O₂/m³ in the bottom portion of the settling tank.

The oxygen content at a depth of 1 m in the settling tank is 2-2.5 g O₂/m³, which facilitates a guaranteed purification of the wastewater from nitrogen compounds.

The pipe ducts 6, 7 for recirculation of the activated sludge into the preliminary aeration tank and the bioreactor are provided with flowmeters, for instance inductive ones.

The automatization process is executed using known oxygen content measuring devices and flowmeters for liquids. Known frequency converters are used as executive mechanisms.

To prove the effectiveness of the method, test values of the method for biological purification of wastewater according to the invention are given (Table 1) at a purification plant with a productivity of 8,000 m³ per 24 h having six zones in the bioreactor alternating in oxygen concentration from 0.3 g O₂/m³ in the first (anaerobic) zone to 4.5 g O₂/m³ in the sixth (aerobic) zone.

**Table 1**

| Month | BOD₅ mg O₂/dm³ | | COD mg O₂/dm³ | | Ammonium nitrogen mg N/dm³ | | Phosphates mg P/dm³ | | Nitrate nitrogen mg N/dm³ | Suspende d matter mg/dm³ |
|---|---|---|---|---|---|---|---|---|---|---|
| | Inlet | Outlet | Inlet | Outlet | Inlet | Outlet | Inlet | Outlet | Outlet | Outlet |
| January | 372 | 3.2 | 651 | 38 | 35.04 | 0.25 | 10.0 | 0.36 | 5.03 | 8.9 |
| February | 526 | 3.6 | 1,086 | 33 | 42.6 | 0.28 | 9.2 | 0.45 | 6.7 | 13.0 |
| March | 299 | ≤ 3.0 | 699 | 29 | 43.8 | 0.22 | 8.95 | 0.9 | 6.17 | 8.8 |
| April | 405 | 3.4 | 986 | 40 | 51.1 | 0.26 | 8.1 | 0.44 | 8.71 | 6.6 |
| May | 372 | ≤ 3.0 | 718 | 28 | 35.1 | 0.28 | 7.53 | 0.41 | 3.2 | 8.3 |
| June | 312 | ≤ 3.0 | 624 | 35 | 38.1 | 0.31 | 6.43 | 0.52 | 3.85 | 8.6 |
| July | 410 | ≤ 3.0 | 768 | 36 | 41.6 | 0.28 | 7.8 | 0.46 | 5.1 | 6.0 |
| August | 364 | ≤ 3.0 | 697 | 34 | 48.5 | 0.13 | 9.6 | 0.78 | 5.6 | 9.2 |
| September | 568 | 4.1 | 1,037 | 38.5 | 42.9 | 0.29 | 8.8 | 0.48 | 6.1 | 9.8 |
| October | 518 | ≤ 3.0 | 816 | 28 | 39.3 | 0.19 | 10.6 | 0.64 | 5.8 | 7.8 |
| November | 412 | ≤ 3.0 | 726 | 32 | 41.2 | 0.16 | 11.2 | 0.43 | 4.2 | 9.6 |
| December | 268 | ≤ 3.0 | 589 | 34 | 28.6 | 0.29 | 10.8 | 0.7 | 5.1 | 8.3 |

| | | | | | | | | | | |
|---|---|---|---|---|---|---|---|---|---|---|
| Note: Concentration of activated sludge in the bioreactor: 6.5 g/dm³ Volume of removed excess activated sludge (dry matter in t/year) subject to removal: 0 | | | | | | | | | | |

Through the creation of a closed-loop ecosystem of sewage purification, the method according to the invention enables an automatization of the biological purification process while lowering the industrial impact on the environment through a minimization of secondary pollution, namely, of excess activated sludge and noxious emissions into the environment, which results in a disposal with equipment for processing and storage of excess activated sludge, a disposal with grounds for its burial, and a decrease in the consumption of reagents utilised in the process of treating the wastewater sediments which would result in secondary pollution.

The automatization of the process allows to exclude the influence of the human factor in controlling the biological purification process.

The use of the method according to the invention achieves the following:
- Saving earth resources: In the planning of a purification plant with a productivity of 25,000 m³/24 h, the dimensions of the health protection zone is diminished between 450 m and 20 m (the project was subjected to a state expertise in 2009 with a positive result).
- Solving the odour problem: The decrease of emissions, of unpleasant-smelling substances into the ambient air through the removal of adsorbed organic matter from insoluble contaminants.
- Cutting energy and exploitation costs through optimization of the air consumption as well as the lack of necessity to treat the secondary pollution and to use expensive reagents.
- The method enables an omission of the primary settling tank from the industrial process, which results in a decrease of exploitation and capital costs for the construction of the purification plant.

## Claims

1. Method for biological purification of wastewater, comprising
- preliminarily treating the wastewater containing insoluble particulate contaminants with organic substances adsorbed on them in a preliminary aeration tank (1), at the inlet of which the activated sludge is supplied from a settling tank (4) to decompose the organic substances adsorbed on the insoluble particulate contaminants, which substances pass into a solution as easily assimilable organic substances,
wherein the preliminary aeration tank (1) is supplied continuously with air by an aeration system (8) via membrane elements (9) for medium-sized bubbles, wherein the concentration of oxygen of the water-sludge mix in the preliminary aeration tank (1) is maintained at a level of 2.5-3.5 g O₂/m³, and wherein the time which the mix of wastewater and activated sludge spends in the preliminary aeration tank (1) is 45 min. to 1.5 hours,
- carrying out a mechanical purification of the wastewater containing clean insoluble particulate contaminants freed from the organic substances adsorbed on them and the activated sludge after the preliminary aeration tank (1) for removal of said insoluble particulate contaminants from the wastewater,
- treating the wastewater in a bioreactor (3) with zones (a, b) alternating in oxygen content when air is supplied to it, wherein the wastewater containing the activated sludge and the easily assimilable organic substances passed into the solution is supplied into the bioreactor (3),
wherein the bioreactor (3) is divided into successively alternating zones (a, b) differing in oxygen content, the first of which is anaerobic (a), and wherein the zones (a, b) are distributed along the horizontal of the bioreactor (3) without spatial separation,
wherein the bioreactor (3) is supplied continuously with air by the aeration system (8) via the membrane elements (9) for medium-sized bubbles in the anaerobic zones (a) and via the membrane elements (10) for fine bubbles in the aerobic zones (b), wherein the oxygen concentration is not higher than 0.7 g O₂/m³ in the anaerobic zone (a) of the bioreactor (3) and is not lower than 2.5 g O₂/m³ in the aerobic zone (b) of the bioreactor (3), wherein the actual oxygen concentration is corrected automatically by regulating the rotation of an airblowing motor by a frequency converter in accordance with the optimum value of oxygen concentration, by regulating the air supply into the bioreactor zones via the aeration elements,
- supplying the purified wastewater into a settling tank (4) which also comprises zones (a, b) differing in oxygen content, where the process of biological purification by activated sludge continues, with subsequent separation of the purified wastewater and the activated sludge, and
- returning the activated sludge from the settling tank (4) into the bioreactor (3) and the preliminary aeration tank (1), forming a closed-loop industrial cycle for wastewater purification.

2. Method according to claim 1, **characterised in that** the wastewater level in the preliminary aeration tank (1) is kept constant with continuous air supply.

3. Method according to claim 1, **characterised in that** the amount of activated sludge supplied from the settling tank (4) into the preliminary aeration tank (1) is 5-10 % of the overall amount of recirculated sludge.

4. Method according to claim 1, **characterised in that** the number of zones (a, b) in the activation tank is even, at least two.

5. Method according to claim 1, **characterised in that** the amount of activated sludge supplied to the bioreactor (3) is 90-95 % of the overall amount of recirculated activated sludge.

6. Method according to claim 1, **characterised in that** the concentration of activated sludge in the bioreactor (3) is 2.5-7.5 g/dm³.

7. Method according to claim 1, **characterised in that** the relation of the volumes of the anaerobic (a) and aerobic (b) zones in the bioreactor (3) is 1:1.

8. Method according to claim 1, **characterised in that** the mechanical purification (2) of the wastewater containing insoluble contaminants freed from the organic matter adsorbed on them is done preferably by filtration carried out on screens with a screen mesh size of 2-5 mm.

9. Method according to claim 1, **characterised in that** the oxygen concentration in the water-sludge mix in the bottom part of the settling tank (4) is 0.1-0.3 g O₂/m³, and at a depth of 1 m in the settling tank (4) it is 2-2.5 g O₂/m³.

## Patentansprüche

1. Verfahren zur biologischen Reinigung von Abwasser, umfassend
- Vorbehandlung des unlösliche Partikelverunreinigungen mit auf ihnen adsorbierten organischen Substanzen enthaltenden Abwassers in einem Vorbelüftungstank (1), an dessen Einlass der Belebtschlamm aus einem Absetzbecken (4) zugeführt wird, um die auf den unlöslichen Partikelverunreinigungen adsorbierten organischen Substanzen zu zersetzen, wobei die Substanzen als leicht assimilierbare organische Substanzen in eine Lösung übergehen,
- wobei der Vorbelüftungstank (1) durch ein Belüftungssystem (8) über Membranelemente (9) für mittelgroße Blasen kontinuierlich mit Luft versorgt wird,
- wobei die Sauerstoffkonzentration des Wasser-Schlamm-Gemisches in dem Vorbelüftungstank (1) auf einem Niveau von 2,5 - 3,5 g O₂/m³ aufrechterhalten wird, und
- wobei die Zeit, die das Gemisch aus Abwasser und Belebtschlamm in dem Vorbelüftungstank (1) verbringt, 45 min bis 1,5 Stunden beträgt,
- Durchführung einer mechanischen Reinigung des von den auf ihnen adsorbierten organischen Substanzen befreite, saubere, unlösliche Partikelverunreinigungen und den Belebtschlamm enthaltenden Abwassers nach dem Vorbelüftungstank (1) zur Entfernung der unlöslichen Partikelverunreinigungen aus dem Abwasser,
- Behandlung des Abwassers in einem Bioreaktor (3) mit Zonen (a, b), deren Sauerstoffgehalt wechselt, wenn ihm Luft zugeführt wird, wobei das den Belebtschlamm und die in die Lösung gegangenen leicht assimilierbaren organischen Substanzen enthaltende Abwasser in den Bioreaktor (3) zugeführt wird,
- wobei der Bioreaktor (3) in nacheinander abwechselnde Zonen (a, b) mit unterschiedlichem Sauerstoffgehalt aufgeteilt ist, wobei die erste anaerob (a) ist, und wobei die Zonen (a, b) entlang der Horizontalen des Bioreaktors (3) ohne räumliche Trennung verteilt sind,
- wobei dem Bioreaktor (3) durch das Belüftungssystem (8) über die Membranelemente (9) für mittelgroße Blasen in den anaeroben Zonen (a) und über die Membranelemente (10) für feine Blasen in den aeroben Zonen (b) kontinuierlich Luft zugeführt wird, wobei die Sauerstoffkonzentration nicht höher als 0,7 g O₂/m³ in der anaeroben Zone (a) des Bioreaktors (3) und nicht niedriger als 2,5 g O₂/m³ in der aeroben Zone (b) des Bioreaktors (3) ist, wobei die tatsächliche Sauerstoffkonzentration durch Regulierung der Drehung eines Luftblasmotors durch einen Frequenzumwandler in Übereinstimmung mit dem optimalen Sauerstoffkonzentrationswert, durch Regulieren der Luftzufuhr in die Bioreaktorzonen über die Belüftungselemente, automatisch korrigiert wird,
- Zuführen des gereinigten Abwassers in einen Absetztank (4), der auch Zonen (a, b) mit unterschiedlichem Sauerstoffgehalt umfasst, wobei der Prozess der biologischen Reinigung durch Belebtschlamm weitergeht, mit anschließender Trennung des gereinigten Abwassers und des Belebtschlamms, und
- Zurückführen des Belebtschlamms aus dem Absetztank (4) in den Bioreaktor (3) und den Vorbelüftungstank (1), wobei ein geschlossener geregelter industrieller Zyklus für Abwasserreinigung gebildet wird.

2. Verfahren nach Anspruch 1, **dadurch gekennzeichnet, dass** das Abwasserniveau in dem Vorbelüftungstank (1) mit kontinuierlicher Luftzufuhr konstant gehalten wird.

3. Verfahren nach Anspruch 1, **dadurch gekennzeichnet, dass** die Menge an aus dem Absetztank (4) in den Vorbelüftungstank (1) zugeführtem Belebtschlamm 5 - 10 % der Gesamtmenge an wieder in Umlauf gebrachtem Schlamm beträgt.

4. Verfahren nach Anspruch 1, **dadurch gekennzeichnet, dass** die Anzahl der Zonen (a, b) in dem Aktivierungstank gerade ist und wenigstens zwei beträgt.

5. Verfahren nach Anspruch 1, **dadurch gekennzeichnet, dass** die Menge an dem Bioreaktor (3) zugeführtem Belebtschlamm 90 - 95 % der Gesamtmenge an wieder in Umlauf gebrachtem Belebtschlamm beträgt.

6. Verfahren nach Anspruch 1, **dadurch gekennzeichnet, dass** die Belebtschlammkonzentration in dem Bioreaktor (3) 2,5 - 7,5 g dm³ beträgt.

7. Verfahren nach Anspruch 1, **dadurch gekennzeichnet, dass** die Beziehung der Volumina der anaeroben (a) und aeroben (b) Zonen in dem Bioreaktor (3) 1:1 ist.

8. Verfahren nach Anspruch 1, **dadurch gekennzeichnet, dass** die mechanische Reinigung (2) des Abwassers, das unlösliche Verunreinigungen enthält, die von der auf ihnen adsorbierten organischen Materie befreit sind, vorzugsweise durch auf Sieben mit einer Siebmaschengröße von 2 - 5 mm durchgeführte Filtration erfolgt.

9. Verfahren nach Anspruch 1, **dadurch gekennzeichnet, dass** die Sauerstoffkonzentration in dem Wasser-Schlamm-Gemisch in dem unteren Teil des Absetztanks (4) 0,1 - 0,3 g O₂/m³, und in einer Tiefe von 1 m in dem Absetztank (4) 2 - 2,5 g O₂/m³ beträgt.

## Revendications

1. Procédé de purification biologique d'eaux usées, comprenant les étapes consistant à
- traiter préalablement les eaux usées contenant des contaminants particulaires insolubles avec des substances organiques adsorbées sur ceux-ci dans un bassin d'aération préalable (1), au niveau de l'entrée duquel les boues activées sont fournies à partir d'un bassin de décantation (4) afin de décomposer les substances organiques adsorbées sur les contaminants particulaires insolubles, lesquelles substances passent dans une solution en tant que substances organiques facilement assimilables,
dans lequel le bassin d'aération préalable (1) est alimenté de manière continue en air grâce à un système d'aération (8) via des éléments membranaires (9) pour bulles de taille moyenne,
dans lequel la concentration en oxygène du mélange eau/boues dans le bassin d'aération préalable (1) est maintenue à un niveau de 2,5 à 3,5 g d'O₂/m³, et
dans lequel le temps que le mélange d'eaux usées et de boues activées passe dans le bassin d'aération préalable (1) est compris entre 45 minutes et 1,5 heure,
- mettre en oeuvre une purification mécanique des eaux usées contenant des contaminants particulaires insolubles propres libérés des substances organiques adsorbées sur ceux-ci et les boues activées après le bassin d'aération préalable (1) en vue d'une élimination desdits contaminants particulaires insolubles à partir des eaux usées,
- traiter les eaux usées dans un bioréacteur (3) comprenant des zones (a, b) dont la teneur en oxygène alterne lorsque de l'air leur est fourni, dans lequel les eaux usées contenant les boues activées et les substances organiques facilement assimilables passées dans la solution sont fournies dans le bioréacteur (3),
dans lequel le bioréacteur (3) est divisé en zones (a, b) alternant de manière successive et différant par leur teneur en oxygène, la première d'entre elles étant anaérobie (a), et dans lequel les zones (a, b) sont réparties le long de l'horizontale du bioréacteur (3) sans séparation spatiale,
dans lequel le bioréacteur (3) est alimenté de manière continue en air grâce au système d'aération (8) via des éléments membranaires (9) pour bulles de taille moyenne dans les zones anaérobies (a) et des éléments membranaires (10) pour bulles fines dans les zones aérobies (b), dans lequel la concentration en oxygène est inférieure ou égale à 0,7 g d'O₂/m³ dans la zone anaérobie (a) du bioréacteur (3) et est supérieure ou égale à 2,5 g d'O₂/m³ dans la zone aérobie (b) du bioréacteur (3), dans lequel la concentration réelle en oxygène est corrigée de manière automatique par régulation de la rotation d'un moteur soufflant de l'air grâce à un convertisseur de fréquence en fonction de la valeur optimale de concentration en oxygène, par régulation de l'alimentation en air dans les zones du bioréacteur via les éléments d'aération,
- fournir les eaux usées purifiées dans un bassin de décantation (4) qui comprend également des zones (a, b) différant par leur teneur en oxygène, où le processus de purification biologique par boues activées continue, avec séparation ultérieure des eaux usées purifiées et des boues activées, et
- renvoyer les boues activées à partir du bassin de décantation (4) jusque dans le bioréacteur (3) et le bassin d'aération préalable (1), ce qui forme un cycle industriel en circuit fermé permettant une purification des eaux usées.

2. Procédé selon la revendication 1, **caractérisé en ce que** le niveau d'eaux usées dans le bassin d'aération préalable (1) est maintenu constant par une alimentation continue en air.

3. Procédé selon la revendication 1, **caractérisé en ce que** la quantité de boues activées fournies à partir du bassin de décantation (4) jusque dans le bassin d'aération préalable (1) est comprise entre 5 et 10% de la quantité totale des boues remises en circulation.

4. Procédé selon la revendication 1, **caractérisé en ce que** le nombre de zones (a, b) dans le bassin d'activation est pair, et est d'au moins deux.

5. Procédé selon la revendication 1, **caractérisé en ce que** la quantité de boues activées fournies vers le bioréacteur (3) est comprise entre 90 et 95 % de la quantité totale de boues activées remises en circulation.

6. Procédé selon la revendication 1, **caractérisé en ce que** la concentration des boues activées dans le bioréacteur (3) est comprise entre 2,5 et 7,5 g/dm³.

7. Procédé selon la revendication 1, **caractérisé en ce que** le rapport des volumes des zones anaérobie (a) et aérobie (b) dans le bioréacteur (3) est de 1:1.

8. Procédé selon la revendication 1, **caractérisé en ce que** la purification mécanique (2) des eaux usées contenant des contaminants insolubles libérés de la matière organique adsorbée sur ceux-ci est réalisée de manière préférée par filtration mise en oeuvre sur des cribles présentant une taille de maille de crible comprise entre 2 et 5 mm.

9. Procédé selon la revendication 1, **caractérisé en ce que** la concentration en oxygène dans le mélange eau-boues dans la partie inférieure du bassin de décantation (4) est comprise entre 0,1 à 0,3 g d'O₂/m³, et est comprise entre 2 et 2,5 g d'O₂/m³ à une profondeur de 1 m dans le bassin de décantation (4).
